# EUROPÄISCHE PATENTSCHRIFT

(11) **EP 3 027 918 B1**
(45) Veröffentlichungstag und Bekanntmachung des Hinweises auf die Patenterteilung: **15.05.2019**
(21) Anmeldenummer: 14752257.7
(22) Anmeldetag: 08.07.2014
(51) Int. Cl.: F16C 27/06

(54) **STELLEINHEIT FÜR EIN KRAFTFAHRZEUG**
ACTUATOR FOR A MOTOR VEHICLE
DISPOSITIF DE COMMANDE POUR VÉHICULE AUTOMOBILE

(30) Priorität: 31.07.2013 DE 102013012732
(43) Veröffentlichungstag der Anmeldung: 08.06.2016
(73) Patentinhaber: Kiekert AG, 42579 Heiligenhaus (DE)
(72) Erfinder: GOLDMANN, Sebastian, 44869 Bochum (DE)
(86) Internationale Anmeldenummer: PCT/DE2014/100232
(87) Internationale Veröffentlichungsnummer: WO 2015/014339

(56) Entgegenhaltungen:
- EP-A1- 2 202 428
- DE-A1- 2 131 969
- DE-A1- 2 358 225
- DE-A1- 10 114 453
- DE-A1-102005 048 527
- DE-A1-102009 036 835
- DE-U1-202006 009 003

## Beschreibung

Die Erfindung betrifft eine Stelleinheit für kraftfahrzeugtechnische Anwendungen, insbesondere Kraftfahrzeugtürverschlüsse oder -verriegelungen, mit einem Gehäuse, mit einem im Gehäuse angeordneten Antrieb, insbesondere einem Schneckenantrieb, mit einem von dem Antrieb beaufschlagbaren Stellglied, und mit zumindest einem Gleitlager zur Aufnahme einer Lagerstelle des Antriebes, insbesondere einer Schnecke des Schneckenantriebes.

Insbesondere aber nicht ausschließlich werden in automobilen Anwendungen Antriebe eingesetzt, um beispielsweise Türen oder Klappen zu verriegeln oder Tankklappen zu sichern. Dabei kommen Antriebe zum Einsatz, die wegen ihrer Größe der Motoren und Gehäuse als Kleinstantriebe bezeichnet werden.

Die im Folgenden beschriebene technische Lösung bezieht sich beispielhaft auf einen Kleinstantrieb in einem Kraftfahrzeug und insbesondere auf ein Schneckengetriebe zur Betätigung einer Seitentür, bevorzugt eine Schiebetür. Da durch die Antriebe auch Positionen verstellt werden können, werden die Antriebseinheiten auch als Stelleinheiten bezeichnet.

Eine Stelleinheit des eingangs beschriebenen Aufbaus wird in der DE 10 2009 036 835 A1 der Anmelderin beschrieben, Hierbei handelt es sich ebenfalls um einen Antrieb, der ein Stellglied in einem Kraftfahrzeugtürschloss beaufschlägt. Der Antrieb ist ebenfalls gelagert in einer Lagerstelle des Gehäuses. Wobei diese Lagerstelle ebenfalls mehrteilig ausgeführt ist. So ist sie hier beispielsweise aus einem plastisch leicht verformbaren Material wie Kunststoff gefertigt. Insbesondere wird hierbei ein Gummilager erwähnt, welches einen Gummilagersitz sowie einen Gummiring umfasst.

In der DE 10 2011 107 634 A1, welche auf der DE 10 2009 036 835 A1 teils basiert, wird ein Gummilager genauer definiert. Es handelt sich hierbei um ein zylinderförmiges Gummilager, das im Gehäuse verdrehsicher mit Aufnahmevorsprüngen eingebaut ist und im Wesentlichen zur radialen Lagesicherung dient, sodass ein Toleranzausgleich in Bezug auf das Getriebe erfolgen kann.

Tatsächlich ist an dieser Stelle das Stellglied des Antriebs als Linear-Stellglied, insbesondere als Spindeltrieb, ausgelegt und wird dafür genutzt, eine Zuzieheinrichtung zu beaufschlagen. Bei der Zuzieheinrichtung mag es sich um eine solche handeln, wie sie beispielsweise in der DE 101 12 120 B4 beschrieben wird. Im Allgemeinen ist eine Zuzieheinrichtung im Schloss dafür verantwortlich die Seitentür eines Fahrzeugs, die beim Schließen nicht vollständig im Schloss einrastet, zusätzlich zu sich hinzuziehen, sodass die Tür vollständig im Schloss eingerastet ist.

Zum weiteren Stand der Technik wird das Schutzrecht DE 20 2006 009 003 U1 hinzugezogen. In ihm wird eine metallische Schlossfalle beschrieben, die zur Minderung der Eingriffsgeräusche zwischen Sperrklinke und Schlossfalle und zwischen Schließkeil und Schlossfalle mit einem Dämpfungsmaterial ummantelt ist. Dieses Material überstreicht eine Bohrung und besteht aus einem Kunststoff, genauer gesagt TPE.

Darüber hinaus ist durch die DE 000 029 707 200 U1 bekannt, dass auch Gleitlager in Türverriegelungen für Bad- und Toilettentüren eingesetzt werden. Wobei das Gleitlager aus einer Kunststofflegierung gebildet sein kann, wenn das Gehäuse aus Stahl oder Aluminium gefertigt ist.

Der gattungsbildende Stand der Technik nach der DE 10 2009 036 835 A1 und DE 20 2006 009 003 U1 stößt dann an Grenzen, wenn es zu Toleranzen der Komponenten des Antriebes kommt. Aufgrund zu großer Toleranzen, wegen Verschleiß oder wegen eines Verzugs aufgrund von Belastungen kann es bei der Übertragung der Drehbewegung des Antriebes auf ein Getriebe respektive das von dem Antrieb beaufschlagbare Stellglied zu Fehlfunktionen kommen.

Tatsächlich können Ungenauigkeiten an dieser Stelle dazu führen, dass das Getriebe respektive der Antrieb mit erhöhten Geräuschen arbeiten und/oder es zu einem zunehmenden Verschleiß kommt. Hier setzt die Erfindung ein.

EP 2 202 428 A1 offenbart die Merkmale des Oberbegriffs von Anspruch 1.

Der Erfindung liegt das technische Problem zugrunde, eine derartige Stelleinheit für kraftfahrzeugtechnische Anwendungen so weiter zu entwickeln, dass eine Ausrichtung des Antriebs stattfindet sowie das Geräuschverhalten optimiert wird und Funktionsstörungen nicht mehr auftreten oder zumindest minimiert sind.

Zur Lösung dieser Aufgabe ist eine gattungsgemäße Stelleinheit für Kraftfahrzeugtürverschlüsse oder -verriegelungen, mit einem Gehäuse, mit einem im Gehäuse angeordneten Antrieb, insbesondere einem Schneckenantrieb, mit einem von dem Antrieb beaufschlagbaren Stellglied, und mit zumindest einem Gleitlager zur Aufnahme einer Lagerstelle des Antriebs, insbesondere einer Schnecke des Schneckenantriebes, vorgesehen, wobei das Gleitlager zusätzlich zumindest bereichsweise eine Kunststoffumhüllung umfasst, die in unterschiedlichen Dicken auf das Gleitlager aufgebracht ist, wobei die Kunststoffumhüllung in axialer Erstreckung des Gleitlagers eine linear unterschiedliche Dicke aufweist, sodass eine konische Kunststoffumhüllung ausgebildet ist.

Durch die Ummantelung des Gleitlagers ist die Möglichkeit geschaffen, Toleranzen bei der Herstellung, bei dem Zusammenbau oder bei einem Verschleiß anzugleichen. Bei dem Einsatz eines Kunststoffes kann je nach Auswahl des Kunststoffes, auf unterschiedliche Anforderung an den Antrieb bezogen beziehungsweise den Kunststoff an die vorliegenden Kräfte und Momente angepasst werden.

Der Kunststoff kann bereichsweise auf das Gleitlager aufgebracht werden. In einer Ausführung kann der Kunststoff zum Beispiel in Form von umfänglich sich axial erstreckenden Streifen auf dem Gleitlager vorliegen. Ebenfalls möglich sind radiale ringförmige Streifen oder ein punktuelles Auftragen der Kunststoffschicht. Ein bereichsweises Aufbringen bietet einerseits einen Kostenvorteil und anderseits kann damit der Toleranzausgleich einstellbar gestaltet werden.

Das Gleitlager eignet sich zur Führung von rotierenden Bauteilen wie beispielsweise einer Schnecke, die ohne Lagerung unrund laufen würde und beim unkontrollierten Rotieren die Bohrung beziehungsweise die Lagerstelle und somit auch das Gehäuse beschädigen würde. Gleichzeitig sorgt das Lager mit seiner Ummantelung für einen angepassten Halt im Gehäuse, Dank diesem Toleranzausgleich dient es in dem Fall zur Kompensation einer abweichenden, gegebenenfalls ovalen Bohrung. Solche abweichende Bohrungen können fertigungsbedingt oder durch Verzug entstehen. Der Toleranzausgleich kann ich axialer sowie radialer Richtung stattfinden.

Der verwendete Kunststoff ist ein vorteilbehaftetes Material wegen seiner Anpassbarkeit an verschiedene Oberflächen und Formen. Durch das Spritzgussverfahren kann er an schwer zugängliche Bereiche in Werkstücken angebracht werden wie beispielsweise Bohrungen oder verwinkelte Lagerstellen. Des Weiteren haftet der angespritzte Kunststoff nach dem Erstarren beziehungsweise Abkühlen optimal an Oberflächen unabhängig davon welche Rauheit die Oberfläche aufweist oder aus welchem Werkstoff sie besteht. Außerdem ist allgemein bekannt, dass Kunststoffe günstig sind, da sie in Mengen vorhanden und leicht herstellbar sind.

Darüber hinaus kann eine äußere Oberfläche des Gleitlagers zumindest bereichsweise von einer Umhüllung aus Elastomerkunststoff versehen sein. Ein Kunststoff aus Elastomer besitzt die günstige Eigenschaft, dass er weich und nachgiebig ist. So kann er zum Beispie! eine Welle oder Schnecke, die empfindliche Oberflächen aufweisen. besonders behutsam lagern.

Außerdem besitzt er Dämpfungseigenschaften, wodurch zum Beispiel ein mögliches unkontrolliertes Schlagen und/oder Schwingen einer Welle unterdrückt werden können. Des Weiteren bietet das Gleitlager weitere Vorteile bezüglich der Fertigungskosten, weil Materialkosten durch wenige sparsam eingesetzte Elastomerschichten auf den Gleitlagerseiten wie beispielsweise an Innen- oder Außenringen verringert werden. Zusätzlich lassen sich dadurch auch die Fertigungszeit und letztlich auch die Fertigungskosten verkürzen.

Einen weiteren Vorteil stellt das Gleitlager dar, weil es umfänglich mit einer Elastomerumhüllung versehen ist. Die Elastomerschicht gleicht somit radiale als auch axiale Abweichungen in der Bohrung aus. Dadurch kann ein unerwünschtes Spiel der Welle beziehungsweise der Schnecke in den jeweiligen Richtungen minimiert werden. Ebenfalls werden Vibrationen dank dem federnden Material abgeschwächt

Weitere Vorteile in der Fertigung bietet die Möglichkeit, dass auf das Gleitlager die Elastomerschicht aufgespritzt wird. Durch das Kunststoffspritzen kann ein Fertigungsgang dieser Gleitlagerkombination in einem Zug schnell erledigt werden und somit werden Fertigungszeit und -kosten eingespart. Diese stoffschlüssige Verbindung bietet eine besondere unkomplizierte Verbindung aufgrund der sofortwirken Haftung nach dem Erstarren der Spritzung. Unnötige Bohrungen und/oder komplizierte Geometrien wie zum Beispiel Schrauben, Bolzen, Stifte oder Klemmen entfallen als mögliche Verbindungselemente.

Außerdem ist das Gleitlager in einem Gehäuse, insbesondere im Gehäuse des Kraftfahrzeugtürverschlusses, bevorzugter in der Lagerbohrung beziehungsweise Lagersitz aufgenommen. Dadurch wird eine kompakte Bauweise des Antriebs erzielt, da das Lager sich direkt in der Stelleinheit befindet, wodurch eine einfache Austauschbarkeit der Stelleinheit sich anbietet. Durch den Einbau des Gleitlagers im Gehäuse der Stelleinheit kann das Gleitlager hohe Kräfte aufnehmen und wieder ausleiten.

Darüber hinaus kann das Gleitlager aus einem Kunststoff oder einer Metalllegierung bestehen. Beide Gleitlagerwerkstoffe lassen sich gut durch eine Umhüllung, insbesondere einer Elastomerumhüllung, beschichten. Es könnte beispielsweise ein Gleitlager aus Metall verwendet werden, weil es eine besonders lange Lebensdauer im Vergleich zum einem Lager aus einem Kunststoff besitzt. Ebenso hätte ein Lager aus Metall bessere mechanische Eigenschaften bezüglich Verschleiß und Festigkeit. Ein Kunststoffgleitlager wäre in dem Sinne vorteilhaft, weil es kostengünstiger herzustellen ist und besonders für Wellen und Achsen mit kleinen Durchmessern bevorzugt wird. Ebenso besitzt ein Gleitlager aus Kunststoff ein geringeres Gewicht als ein vergleichbares Metalllager, was Vorteile im Leichtbau bietet.

Außerdem ist in dem Gleitlager eine Antriebswelle des Antriebs, bevorzugt eine Welle und noch bevorzugter eine Schneckenwelle gelagert. Durch seine Elastomerumhüllung ist das Gleitlager optimal anpassbar an das Gehäuse, weil es unerwünschtes Spiel ausgleicht und somit eine gute Lagerung gewährleistet, wovon auch die im Lager befindliche Welle profitiert. Sie liegt optimal gelagert, weil sie gesichert ist radialer und axialer Richtung. Das Schlagen, Eiern oder Schwingen der Welle wird soweit unterdrückt oder vermieden. Darüber hinaus ist der Einbau der Welle beziehungsweise Schnecke so weit von Vorteil, weil das Lager von einer Seite leicht zugänglich ist, da es sich in unmittelbarer Nähe zur Oberfläche des Gehäuses befindet. Dadurch lässt sich die Welle oder Schnecke einfacher einsetzten. Ebenso denkbar ist die mögliche Fertigungsweise, worin das Gleitlager mit Kunststoffumhüllung direkt auf die Schnecke montiert wird und danach werden sie zusammen in das Gehäuse eingesetzt.

Einen weiteren Vorteil stellt die Ausführung des Gleitlagers dar, indem die Kunststoffumhüllung des Gleitlagers topfförmig ausgebildet ist, sodass das Gleitlager radial und axial umfasst ist. Zuzüglich der oben genannten Merkmale bezüglich der dampfungstechnischen Eigenschaften des Kunststoffes, ist auch die Fertigung solch einer Ummantelung in Form eines Topfes günstig, welche das Lager nicht nur seitlich sondern auch an der Stirnseite abdecken kann. Die Schicht lässt sich somit in einem einzigen Spritzgussvorgang ohne Abzusetzen am Lager anbringen.

Darüber hinaus sind der Antrieb und das Gleitlager mit einer Kunststoffumhüllung rotationssymmetrisch im Vergleich zu einer gemeinsamen Rotationssymmetrieachse ausgebildet. Dadurch ist eine gerade, konzentrische Führung der Welle beziehungsweise Schnecke gewährleistet. Eine optimal laufende Welle ohne Schlagen und ähnliches trägt zu einer geräuschmindernden Funktion der Einheit bei.

Außerdem kann sich ein Vorteil des Gleitlagers mit Kunststoffumhüllung daraus ergeben, dass die Kunststoffumhüllung in unterschiedliche Dicken auf dem Gleitlager aufgebracht sein kann. Dadurch ergibt sich eine optimale Anpassbarkeit des Gleitlagers an abweichende Bohrungen und/oder Absätzen und/oder Vorsprüngen im Gehäuse. Ebenfalls können Toleranzen im gefertigten Gleitlager selbst ausgeglichen werden.

Des Weiteren kann die Kunststoffumhüllung in axialer Erstreckung des Gleitlagers eine linear unterschiedliche Dicke aufweisen, sodass insbesondere eine konische Kunststoffumhüllung ausbildbar ist. Somit könnte das Gleitlager zentriert in einer beispielweise kegeligen oder konischen Bohrung eingepasst werden. Dies würde Vorteile bezüglich einer axialen Lagesicherung bieten.

Darüber hinaus könnte sich ein Vorteil aus der möglichen Ausführung ergeben, dass die Kunststoffumhüllung eine Wellenform umfasst. Somit könnte eine empfindliche Oberfläche der Welle oder Schnecke umfänglich optimal geschützt werden. Die Welle könnte spielfrei in das Gleitlager oder möglicherweise in den Innenring des Gleitlagers eingesetzt werden, zumindest ohne Winkelabweichung von der Rotationsachse.

Im Folgenden wird die Erfindung anhand einer lediglich ein Ausführungsbeispiel darstellenden Zeichnung näher erläutert; es zeigen:
Fig. 1 eine Seitenansicht des eingebauten Gleitlagers im Schlossgehäuse, wo das Gleitlager eine Schnecke des Schneckenantriebes lagert,
**Fig. 2** einen Schnitt durch den Gegenstand nach Fig. 1 im Bereich des Gleitlagers.

In den Figuren ist ein seitlicher Ausschnitt einer Stelleinheit für kraftfahrzeugtechnische Anwendungen dargestellt. Bei kraftfahrzeugtechnischen Anwendungen handelt es sich im Beispielfall und nicht einschränkend um Stellfunktionen in Verbindung mit einem oder mehreren Kraftfahrzeugtürverschlüssen 1. Tatsächlich mag die dargestellte Stelleinheit dafür genutzt werden, eine Zuzieheinrichtung bei einem solchen Kraftfahrzeugtürverschluss 1 zu beaufschlagen, wie sie beispielsweise in der DE 101 12 120 B4 beschrieben wird. Das ist selbstverständlich nur beispielhaft und nicht einschränkend zu verstehen.

Um die beschriebene Stellbewegung bzw. Beaufschlagung der Zuzieheinrichtung bei dem Kraftfahrzeugverschluss 1 im Detail bewerkstelligen zu können, verfügt die Stelleinheit in ihrem grundsätzlichen Aufbau über einen Antrieb 2, insbesondere einen Schneckenantrieb. Das Stellglied wird von dem Antrieb 2 beaufschlagt, um die Zuzieheinrichtung an dem Kraftfahrzeugtürverschluss 1 zu betätigen. Der Antrieb 2 kann in möglichen Ausführungsformen von Motoren und Ähnlichem und/oder entsprechenden Zwischengetrieben angesteuert werden.

Darüber hinaus ist noch ein Gehäuse 3 realisiert. Der Antrieb 2 wird in dem Gehäuse 3 aufgenommen bzw. ist hierin angeordnet. Der Antrieb umfasst unteranderem eine Schnecke 6 und ein Schneckenrad 4. Dabei besitzt die Schnecke 6 ein Schneckenkopfende 9, Schneckenzähne 8 sowie einen Schneckenschaft 5. Die Schneckenzähne 8 der Schnecke 6 kämen über die Zähne des Schneckenrades 4. In dieser Ausführung liegen das Schneckenrad 4 und die Schnecke 6 in einer Ebene.

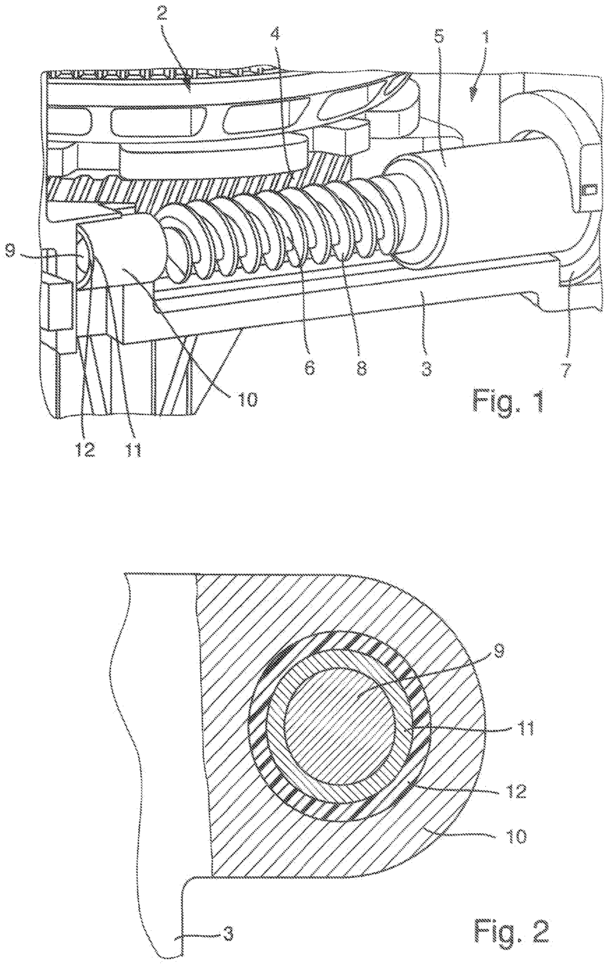

In der Figur 1 rechts gesehen, ist die Schnecke 6 des Antriebes mit einem Ende ihres Schneckenschaftes 5 in einer Schaftlagerung 7 positioniert. Die Schaftlagerung 7 ist hierbei nur bereichsweise gezeigt, umschließt das Ende des Schneckenschafts 5 jedoch im ganzen Umfang.

Am anderen Ende der Schnecke 6 befindet sich das Schneckenkopfende 9. Das Schneckenkopfende 9 ist in dem Gleitlager 11 gelagert. Das Gleitlager 11 umschließt das Schneckenkopfende 9 im ganzen Umfang, sodass das Schneckenkopfende 9 nicht über das Gleitlager 11 hinaus herausragt. Gleitlager 11, Schnecke 6 und Schaftlagerung 7 haben eine gemeinsame Mittellinie, die zentral durch die Mittelpunkte der Bauteile führt. Schneckenkopfende 9 und Schneckenschaft 5 sind vorzugsweise zylinderförmig ausgebildet.

Das Gleitlager 11 ist links in der Zeichnung Fig. 1 ersichtlich und befindet sich in einem Lagersitz 10. Der Lagersitz 10 ist ein Teil des Gehäuses 3 und kann dieser Ausführung als Auswölbung seitlich aus dem Gehäuse 3 herausragen. Der Lagersitz 10 ist hierbei von außen betrachtet zylindrisch geformt und liegt an einer Oberfläche des Gehäuses 3 an. Der Innenraum des Lagersitzes 10 ist vorzugsweise auch zylinderförmig ausgebildet, noch bevorzugter kann es sich hierbei um eine Bohrung handeln.

Denkbar ist auch eine mögliche Ausführung des Lagersitzes 10 als separates Bauteil, welches an das Gehäuse 3 montiert wird.

Außerdem ist das Gleitlager 11 zylinderförmig und besteht vorzugsweise aus Kunststoff Darüber hinaus ist das Gleitlager 11 an seinen Außenflächen mit einer Elastomerumhüllung 12 beschichtet.

In dieser Ausführung bedeckt die Elastomerumhüllung 12 die Mantelfläche des Gleitlagers 11 vollständig. Ebenso ist die Stirnseite des Gleitlagers 11 von einem Elastomerkunststoff vollständig, zumindest bereichsweise beschichtet. Die Dicke der Elastomerumhüllung 12 ist frei variierbar und die Elastomerumhüllung 12 schmiegt sich an der Form des Gehäuses 3 beziehungsweise am Innenraum des Lagersitzes 10 an.

In einer anderen Ausführungsform des Gleitlagers 11, die jedoch hier nicht gezeigt wird, kann die Elastomerumhüllung 12 an der Außenfläche innerhalb des Gleitlagers 11 angebracht sein. Dabei könnte die Elastomerumhüllung 12 beispielsweise mit dem Schneckenkopfende 9 in Kontakt stehen, da es hierbei das Gleitlager 11 von der Schnecke 6 räumlich trennt.

## Patentansprüche

1. Stelleinheit für Kraftfahrzeugtürverschlüsse oder -verriegelungen (1), mit einem Gehäuse (3), mit einem im Gehäuse (3) angeordneten Antrieb (2), insbesondere einem Schneckenantrieb (2), mit einem von dem Antrieb (2) beaufschlagbaren Stellglied, und mit zumindest einem Gleitlager (11) zur Aufnahme einer Lagerstelle des Antriebs, insbesondere einer Schnecke (6) des Schneckenantriebes (2), wobei das Gleitlager (11) zusätzlich zumindest bereichsweise eine Kunststoffumhüllung (12) umfasst, die in unterschiedlichen Dicken auf das Gleitlager (11) aufgebracht ist, **dadurch gekennzeichnet, dass** die Kunststoffumhüllung (12) in axialer Erstreckung des Gleitlagers (11) eine linear unterschiedliche Dicke aufweist, sodass eine konische Kunststoffumhüllung (12) ausgebildet ist.

2. Stelleinheit nach Anspruch 1, **dadurch gekennzeichnet, dass** das Gleitlager (11) eine zylindrische Form aufweist und die Kunststoffumhüllung (12) auf einer radial äußeren Oberfläche aufgebracht ist.

3. Stelleinheit nach einem der Ansprüche 1 oder 2, **dadurch gekennzeichnet, dass** die Kunststoffumhüllung (12) einen elastomeren Werkstoff umfasst.

4. Stelleinheit nach Anspruch 1 bis 3, **dadurch gekennzeichnet, dass** eine Elastomerschicht auf das Gleitlager (11) aufgespritzt ist.

5. Stelleinheit nach einem der Ansprüche 1 bis 4, **dadurch gekennzeichnet, dass** das Gleitlager (11) im Gehäuse (3) des Kraftfahrzeugtürverschlusses (1) aufgenommen, insbesondere in der Lagerbohrung beziehungsweise im Lagersitz aufgenommen, ist.

6. Stelleinheit nach einem der Ansprüche 1 bis 5, **dadurch gekennzeichnet, dass** das Gleitlager (11) aus einem Kunststoff oder einem metallischen Werkstoff, insbesondere einem legierten Stahl, besteht.

7. Stelleinheit nach einem der Ansprüche 1 bis 6, **dadurch gekennzeichnet, dass** eine Antriebswelle des Antriebs (2), bevorzugt eine Welle und noch bevorzugter eine Schneckenwelle (6), in dem Gleitlager (11) gelagert ist.

8. Stelleinheit nach einem der Ansprüche 1 bis 7, **dadurch gekennzeichnet, dass** die Kunststoffumhüllung (12) des Gleitlagers (11) topfförmig ausgebildet ist, sodass das Gleitlager (11) radial und axial umfasst ist.

9. Stelleinheit nach einem der Ansprüche 1 bis 8, **dadurch gekennzeichnet, dass** der Antrieb (2) und das Gleitlager (11) mit einer Kunststoffumhüllung (12) rotationssymmetrisch im Vergleich zu einer gemeinsamen Rotationssymmetrieachse ausgebildet sind.

10. Stelleinheit nach Anspruch 1, **dadurch gekennzeichnet, dass** die Kunststoffumhüllung (12) eine Wellenform umfasst.

## Claims

1. Actuator unit for motor vehicle door locks or latches (1), comprising a housing (3), a drive (2) arranged in the housing (3), in particular a worm drive (2), with an actuator which can be acted upon by the drive (2), and at least one slide bearing (11) for receiving a bearing point of the drive, in particular a worm (6) of the worm drive (2), wherein the slide bearing (11) additionally comprises at least partially a plastic sheath (12) which is applied in different thicknesses to the sliding bearing (11), **characterized in that** the plastic sheath (12) in the axial extent of the sliding bearing (11) has a linearly different thickness, so that a conical plastic sheath (12) is formed.

2. Actuator unit according to claim 1, **characterized in that** the sliding bearing (11) has a cylindrical shape and the plastic sheath (12) is applied to a radially outer surface.

3. Actuator unit according to one of the claims 1 or 2, **characterized in that** the plastic sheath (12) comprises an elastomeric material.

4. Actuator unit according to claim 1 to 3, **characterized in that** an elastomer layer is sprayed onto the sliding bearing (11).

5. Actuator unit according to one of claims 1 to 4, **characterized in that** the sliding bearing (11) accommodated in the housing (3) of the motor vehicle door lock (1), in particular is fitted in the bearing bore or in the bearing seat.

6. Actuator unit according to one of claims 1 to 5, **characterized in that** the sliding bearing (11) consists of a plastic or a metallic material, in particular an alloyed steel.

7. Actuator unit according to one of claims 1 to 6, **characterized in that** a drive shaft of the drive (2), preferably a shaft and more preferably a worm shaft (6), is mounted in the sliding bearing (11).

8. Actuator unit according to one of claims 1 to 7, **characterized in that** the plastic sheath (12) of the sliding bearing (11) is cup-shaped, so that the sliding bearing (11) is radially and axially included.

9. Actuator unit according to claim 1 to 8, **characterized in that** the drive (2) and the sliding bearing (11) with a plastic sheath (12) are rotationally symmetrical compared to a common rotational symmetrical axis (A).

10. Actuator unit according to claim 1, **characterized in that** the plastic sheath (12) comprises a waveform.

## Revendications

1. Unité de réglage pour serrures ou verrous de portes de véhicules motorisés (1), équipée d'un boîtier (3), d'un système d'entraînement (3) logé dans le boîtier (3), et notamment d'un mécanisme de transmission à vis sans fin (2), d'un organe de réglage commandé par le système d'entraînement (2), et d'au moins un palier à glissement (11) permettant d'accueillir un point d'appui de l'entraînement, notamment d'une vis sans fin (6) du mécanisme de transmission à vis sans fin (2) à savoir que le palier à glissement (11) comprend en plus dans certaines zones au moins une enveloppe en plastique (12) appliquée dans différentes épaisseurs sur le palier à glissement (11), **caractérisée en ce que** l'enveloppe en plastique (12) présente, dans l'extension axiale du palier à glissement (11), une épaisseur linéaire différente, de manière à former un enveloppe conique en plastique (12).

2. Unité de réglage selon la revendication 1, **caractérisée en ce que** le palier à glissement (11) est de forme cylindrique et l'enveloppe plastique (12) est montée sur une surface extérieure radiale.

3. Unité de réglage selon une des revendications 1 ou 2, **caractérisée en ce que** l'enveloppe en plastique (12) comprend un matériau élastomère.

4. Unité de réglage selon la revendication 1 à 3, **caractérisée en ce qu'**une couche d'élastomère est pulvérisée sur le palier à glissement (11).

5. Unité de réglage selon une des revendications 1 à 4, **caractérisée en ce que** le palier à glissement (11) est inséré dans le boîtier (3) de la serrure de de porte de voiture (1), et notamment dans l'alésage du roulement / dans le serrage du roulement.

6. Unité de réglage selon une des revendications 1 à 5, **caractérisée en ce que** le palier à glissement (11) est dans une matière synthétique ou un matériau métallique, notamment en acier allié.

7. Unité de réglage selon une des revendications 1 à 6, **caractérisée en ce qu'**un arbre du mécanisme d'entraînement (2), de préférence un arbre, et, mieux encore, un arbre à vis sans fin (6), est positionné dans le palier à glissement (11).

8. Unité de réglage selon une des revendications 1 à 7, **caractérisée en ce que** l'enveloppe plastique (12) du palier à glissement (11) a la forme d'un pot, de sorte que le palier à glissement (11) est couvert radialement et axialement.

9. Unité de réglage selon une des revendications 1 à 8, **caractérisée en ce que** l'entraînement (2) et le palier à glissement (11), équipés d'une enveloppe en plastique (12), sont de rotation symétrique par rapport à un axe de symétrie de rotation commun.

10. Unité de réglage selon la revendication 1, **caractérisée en ce que** l'enveloppe plastique (12) comprend une forme ondulée.
